# EUROPÄISCHE PATENTSCHRIFT

(11) **EP 3 283 546 B1**
(45) Veröffentlichungstag und Bekanntmachung des Hinweises auf die Patenterteilung: **13.11.2019**
(21) Anmeldenummer: 16701486.9
(22) Anmeldetag: 25.01.2016
(51) Int. Cl.: C11D 3/37, C11D 17/00, C11D 17/06, C08G 63/672, C11D 3/386, C11D 3/42

(54) **FLÜSSIGES WASCH- ODER REINIGUNGSMITTEL MIT SUSPENDIERTEN PARTIKELN**
LIQUID DETERGENT OR CLEANING AGENT WITH SUSPENDED PARTICLES
AGENT LIQUIDE DE LAVAGE OU DE NETTOYAGE COMPRENANT DES PARTICULES EN SUSPENSION

(30) Priorität: 13.04.2015 DE 102015206547
(43) Veröffentlichungstag der Anmeldung: 21.02.2018
(73) Patentinhaber: Henkel AG & Co. KGaA, 40589 Düsseldorf (DE)
(72) Erfinder: SCHMIEDEL, Peter, 40591 Düsseldorf (DE); ROGGE, Bent, 40597 Düsseldorf (DE); PANZICA, Danilo, 40721 Hilden (DE); MOROZOVA, Olga, 40225 Düsseldorf (DE); SCHMITZ, Kerstin, 40215 Düsseldorf (DE)
(86) Internationale Anmeldenummer: PCT/EP2016/051429
(87) Internationale Veröffentlichungsnummer: WO 2016/165841

(56) Entgegenhaltungen:
- EP-A1- 0 442 101
- EP-A2- 0 272 033
- WO-A1-2009/138177
- WO-A1-2015/001293
- DE-A1- 2 340 915

## Beschreibung

Die Erfindung betrifft ein flüssiges Wasch- oder Reinigungsmittel mit suspendierten Partikeln.

Zur Einarbeitung in flüssige Wasch- oder Reinigungsmittel bieten sich entweder solche Inhaltsstoffe an, die sich in der flüssigen Phase des Mittels lösen oder sich ungelöst entsprechend homogen suspendieren lassen. Im Falle von unlöslichen Inhaltsstoffen ist eine stabile, homogene Suspension für die Funktion und Ästhetik des Wasch- oder Reinigungsmittels notwendig. Sedimentierte Feststoffpartikel können Verklumpen und bei der Anwendung zu lokalen Überkonzentrationen des Inhaltsstoffes und damit zur ungleichmäßigen Dosierung je Waschladung führen. Sichtbare Verklumpungen, schmierige Niederschläge oder Ablagerungen des festen Inhaltsstoffs an eine z.B. transparente Wandung des Vorratsgefäßes bedeuten zudem einen ästhetischen Makel.

Die Einarbeitung einiger ggf. eingefärbter, vom nackten menschlichen Auge in Suspension in einer transparenten oder transluzenten, flüssigen Phase als individualisierte Teilchen erkennbare Feststoffpartikel, werden oftmals als Speckles bezeichnet. Entsprechende Partikel weisen zu diesem Zweck eine entsprechende Partikelgröße auf und bieten dem Verbraucher einen ästhetischen Reiz. Allerdings resultieren aus der Partikelgröße technische Probleme. Einerseits sollen sich die Speckles nicht in dem wasserhaltigen flüssigen Wasch- oder Reinigungsmittel lösen oder stark quellen. Bei der Anwendung jedoch sollen sich die Speckles nicht als Feststoff auf dem Substrat wie Textilien oder der zu reinigenden harten Oberfläche als Rückstand abscheiden, sondern sich in optimaler Weise nach der Herstellung des Wasch- oder Reinigungsmediums durch Verdünnung des Wasch- oder Reinigungsmittels mit Wasser im Verlaufe der Anwendung auflösen oder disintegrieren. Wenn Aktivstoffe, insbesondere polymere Aktivstoffe, in Speckles enthalten sind, kommt es gelegentlich zu fleckförmigen Ablagerungen auf der behandelten Oberfläche. Dies ist insbesondere dann der Fall, wenn die Speckles einen hohen Aktivstoffgehalt aufweisen, beispielsweise bezogen auf ihr Gewicht ab 30 Gew.-% Aktivstoff.

Der vorliegenden Erfindung liegt die Aufgabe zugrunde, flüssige Wasch- oder Reinigungsmittel bereitzustellen, die in einer (bevorzugt transparenten oder transluzenten) flüssigen Phase als individualisierte Teilchen erkennbare Feststoffpartikel (Speckles) enthalten, die sich trotz ihres hohen Aktivstoffgehaltes nicht in der wasserhaltigen flüssigen Phase des Mittels lösen und nach der Anwendung keine sichtbaren partikelförmigen oder fleckförmigen Rückstände auf der behandelten Oberfläche hinterlassen.

In der Druckschrift WO 2009/138177 A1 werden rieselfähige, feste Additive für Wasch- und Reinigungsmittel beschrieben, die durch Polykondensation von aromatischen Dicarbonsäuren oder deren (C₁-C₄-)-Alkylestern mit 1,2-Propylenglykol, Polyethylenglykol mit einer mittleren Molmasse von 200 bis 8000 g/mol, C₁-C₄-Alkylpolyalkylenglykolether mit einer mittleren Molmasse des Polyalkylenglykolethers von 200 bis 5000 und einer Polyfunktionellen Verbindung erhalten werden.

Die Druckschrift EP 0 272 033 A2 betrifft Copolymere auf Basis eines Terephthalatester-Rückgrats mit der allgemeinen Formel Z-[(T-OC₃H₆O)ᵤ(T-[(OC₂H₄)ₙO])ᵥ]-T-Z₁, worin T ein Terephthaloyl-Rest ist und Z sowie Z1 jeweils unabhängig für eine spezielle Polyalkylenglykolgruppe steht. Besagte Copolymere eignen sich zur Verwendung in Textilwaschmitteln.

Die Druckschrift WO 2015/001293 A1 betrifft die Oberflächenbehandlung von Metall mit einer Zusammensetzung, enthaltend Polymerpartikel, welche Polyethylenterephthalat enthalten können.

Aus der Druckschrift DE 23 40 915 A1 sind Verfahren zur Herstellung von Granulaten mit Soil-Release Zusatzstoff für Reinigungsmittel in Pulverform bekannt. Die Granulate umfassen bevorzugt 10 bis 50 Gew.-% Copolymerisate aus Polyethylenglykol und Polyethylenglycolterephthalat.

Überraschenderweise wurde gefunden, dass dies gelingt, wenn als Grundmaterial der Speckles ein spezieller anionischer Polyester als Aktivstoff genutzt wird, in das zusätzliche Inhaltsstoffe, insbesondere polymere Aktivstoffe, eingearbeitet sein können.

Ein erster Gegenstand der Erfindung sind daher flüssige Wasch- oder Reinigungsmittel, enthaltend
(i) eine flüssige Phase, enthaltend mindestens ein Tensid und Wasser, und
(ii) in der flüssigen Phase suspendierte Feststoffpartikel mit einem mittleren Partikeldurchmesser X_{50,3}, Volumenmittel, von 0,01 mm bis 3 mm, enthaltend bezogen auf das Gewicht der Feststoffpartikel eine Gesamtmenge von 30 bis 100 Gew.-%, bevorzugt 50 bis 100 Gew.-%, besonders bevorzugt 75 bis 100 Gew.-%, mindestens eines anionischen Polyesters, enthaltend mindestens eine Struktureinheit der Formel (I) und mindestens eine Struktureinheit der Formel (II) und mindestens eine Struktureinheit der Formel (III) 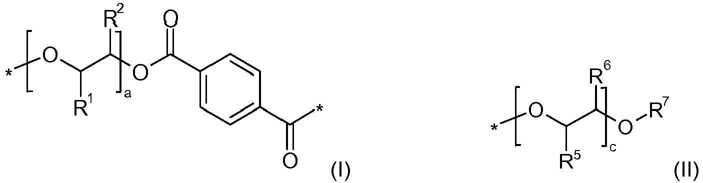 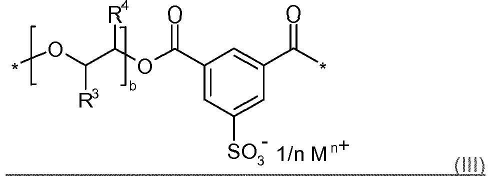 worin
   a, b und c unabhängig voneinander jeweils für eine Zahl von 1 bis 200 steht, R¹, R², R⁵ und R⁶ unabhängig voneinander jeweils für Wasserstoff oder eine C₁-C₁₈-n-Alkylgruppe oder C₃-C₁₈-iso-Alkylgruppe steht,
   R⁷ für eine lineare oder verzweigte C₁-C₃₀-Alkylgruppe oder für eine lineare oder verzweigte C₂-C₃₀-Alkenylgruppe, für eine Cycloalkylgruppe mit 5 bis 9 Kohlenstoffatomen, für eine C₆-C₃₀-Arylgruppe oder für eine C₆-C₃₀-Arylalkylgruppe steht, * für eine freie Valenz des betreffenden Strukturelements steht, die im Polymerrückgrat des Polyesters eine Esterverknüpfung ausbildet,
   1/n Mⁿ⁺ für ein Äquivalent eines Kations mit der Ladungszahl n steht mit n = 1, 2 oder 3, R¹, R², R³, R⁴, R⁵ und R⁶ unabhängig voneinander jeweils für Wasserstoff oder eine C₁-C₁₈-n-Alkylgruppe oder C₃-C₁₈-iso-Alkylgruppe steht.

Ein Stoff ist gemäß Definition der Erfindung ein Feststoff (festförmig), wenn er bei 25°C und 1013 mbar im festen Aggregatzustand vorliegt.

Ein Stoff ist gemäß Definition der Erfindung flüssig, wenn er bei 25°C und 1013 mbar im flüssigen Aggregatzustand vorliegt.

Eine chemische Verbindung ist eine organische Verbindung, wenn das Molekül der chemischen Verbindung mindestens eine kovalente Bindung zwischen Kohlenstoff und Wasserstoff enthält.

Eine chemische Verbindung ist im Umkehrschluss zur Definition der organischen Verbindung eine anorganische Verbindung, wenn das Molekül der chemischen Verbindung keine kovalente Bindung zwischen Kohlenstoff und Wasserstoff enthält.

Bei dem mittleren Partikeldurchmesser X_{50,3} handelt es sich um das Volumenmittel der Partikel (gemessen nach Lagerung der Feststoffpartikel im Klimaschrank für 24 Stunden bei 30°C und 50 % relativer Luftfeuchtigkeit und vor der Einarbeitung in die flüssige Phase des erfindungsgemäßen Mittels z.B. mit Siebanalyse oder durch einen Partikelgrößenanalysator Camsizer, Firma Retsch). Der mittlere Partikeldurchmesser des suspendierten Feststoffes ist explizit nur auf die in dem erfindungsgemäßen Mittel enthaltenen, suspendierten Partikel bezogen, die vor der Einarbeitung in das erfindungsgemäße Mittel (nach Lagerung im Klimaschrank für 24 Stunden bei 30°C und 50 % relativer Luftfeuchtigkeit) 30 bis 100 Gew.-%, bevorzugt 50 bis 100 Gew.-%, besonders bevorzugt 75 bis 100 Gew.-%, mindestens eines besagten anionischen Polyesters enthalten.

Eine mit einem * gekennzeichnete chemische Bindung in den Formeln (I), (II), (III) bedeutet eine freie Valenz des betreffenden Strukturelements, die im Polymerrückgrat des Polyesters eine Esterverknüpfung ausbildet, beispielsweise entweder mit einem der besagten Strukturelemente der Formeln (I) oder der Formel (III) oder mit einem weiteren zumindest bivalenten Strukturelement. Zur Ausbildung eines Polymerterminus binden besagte Valenzen der Formel (I) bzw. (III) unter Bildung einer Esterverknüpfung an das Strukturelement der Formel (II) oder an ein weiteres, monovalentes Strukturelement.

Bei den erfindungsgemäßen anionischen Polyestern handelt es sich um Copolyester, die zumindest aus Monomeren gebildet werden können, die nach einer Polymerisationsreaktion entsprechende Struktureinheiten der Formeln (I) und (II) und (III) zumindest im Polymerrückgrat ergeben. Derartige Polyester können beispielsweise erhalten werden durch Polykondensation von Terephthalsäuredialkylester und 5-Sulfoisophthalsäuredialkylester und Alkylenglykolen und optional Polyalkylenglykolen (bei a, b und/oder c > 1) und einseitig endverschlossenen Polyalkylenglykolen. Die Synthese der erfindungsgemäßen anionischen Polyester kann nach bekannten Verfahren erfolgen, beispielsweise indem man die oben genannten Komponenten unter Zusatz eines Katalysators zunächst bei Normaldruck erhitzt und dann die erforderlichen Molekulargewichte im Vakuum durch Abdestillieren überstöchiometrischer Mengen der eingesetzten Glykole aufbaut. Für die Reaktion eignen sich die bekannten Umesterungs- und Kondensationskatalysatoren, wie beispielsweise Titantetraisopropylat, Dibutylzinnoxid, Alkali- oder Erdalkalimetallalkoholate oder Antimontrioxid/Calciumacetat. Bezüglich weiterer Einzelheiten sei auf EP 442 101 verwiesen.

Die besagten Struktureinheiten können entweder im Block oder statistisch verteilt im Polyestermolekül des besagten anionischen Polyesters vorliegen.

Bevorzugte suspendierte, Polyester-haltige Feststoffpartikel weisen bevorzugt einen mittleren Partikeldurchmesser (Volumenmittel) X_{50,3} von 1 mm bis 2 mm (wie oben nach Lagerung im Klimaschrank für 24 Stunden bei 30°C und 50 % relativer Luftfeuchtigkeit, gemessen mit Siebanalyse oder durch einen Partikelgrößenanalysator Camsizer, Firma Retsch) auf.

Es ist erfindungsgemäß bevorzugt, wenn die Gesamtmenge des in den suspendierten Feststoffpartikeln befindlichen, anionischen Polyesters im Zahlenmittel 1 bis 50 Struktureinheiten der Formel (I) und 1 bis 50 Struktureinheiten der Formel (III) enthält. Da es sich um das Zahlenmittel der jeweiligen Struktureinheiten berechnet über die Gesamtmenge des in der suspendierten festen Phase befindlichen, anionischen Polyesters handelt, sind die Werte dieser und der nachfolgenden Zahlenmittel aus der Anzahl von Struktureinheiten rationale Zahlen.

Wiederum bevorzugt enthält die Gesamtmenge des in den suspendierten Feststoffpartikeln enthaltenen anionischen Polyesters jeweils im Zahlenmittel zwischen 1 und 25, insbesondere zwischen 1 bis 10, besonders bevorzugt zwischen 1 und 5, Struktureinheiten der Formel (I) und zwischen 0,05 und 15, insbesondere zwischen 0,1 und 10 und besonders bevorzugt zwischen 0,25 und 3, Struktureinheiten des Formel (II) und besonders bevorzugt zwischen 1 und 30, insbesondere zwischen 2 und 15, besonders bevorzugt zwischen 3 und 10, Struktureinheiten der Formel (III).

Die anionischen Polyester, enthaltend die Struktureinheiten (I), (II) und (III) (und gegebenenfalls (IV) vide supra), haben bevorzugt zahlenmittlere Molekulargewichte im Bereich von 700 bis 50.000 g/mol, wobei das zahlenmittlere Molekulargewicht bestimmt werden kann mittels Größenausschlusschromatographie in wässriger Lösung unter Verwendung einer Kalibrierung mit Hilfe eng verteilter Polyacrylsäure-Na-Salz - Standards. Bevorzugt liegen die zahlenmittleren Molekulargewichte im Bereich von 800 bis 25.000 g/mol, insbesondere 1.000 bis 15.000 g/ mol, besonders bevorzugt 1.200 bis 12.000 g/mol.

Es ist erfindungsgemäß bevorzugt, wenn 1/n Mⁿ⁺ gemäß Formel (III) für Li⁺, Na⁺, K⁺, 1/2 Mg²⁺, 1/2 Ca²⁺, 1/3 Al³⁺, NH₄⁺, Monoalkyl-, Dialkyl-, Trialkyl- oder Tetraalkylammonium steht, wobei es sich bei den Alkylresten der Ammoniumionen um C₁-C₂₂-Alkyl- oder C₂-C₁₀-Hydroxyalkylreste oder deren beliebige Mischungen handelt.

Bevorzugt sind anionische Polyester, in denen entsprechend in Formeln (I), (II) und (III)
R¹,R²,R³,R⁴,R⁵ und R⁶ unabhängig voneinander jeweils für Wasserstoff oder Methyl, R⁷ für Methyl, und/oder a, b und c unabhängig voneinander jeweils für eine Zahl von 1 bis 200, insbesondere 1 bis 20, besonders bevorzugt 1 bis 5, außerordentlich bevorzugt a und b = 1, bedeuten und/oder c eine Zahl von 2 bis 10 ist.

Wiederum bevorzugt enthält die Gesamtmenge des in den suspendierten Feststoffpartikeln enthaltenen besagten anionischen Polyesters jeweils im Zahlenmittel zwischen 1 und 25, insbesondere zwischen 1 bis 10, besonders bevorzugt zwischen 1 und 5, Struktureinheiten der Formel (I) und zwischen 0,05 und 15, insbesondere zwischen 0,1 und 10 und besonders bevorzugt zwischen 0,25 und 3, Struktureinheiten des Formel (II) und besonders bevorzugt zusätzlich zwischen 1 und 30, insbesondere zwischen 2 und 15, besonders bevorzugt zwischen 3 und 10, Struktureinheiten der Formel (III).

Ganz besonders bevorzugt sind anionische Polyester, in denen entsprechend in Formeln (I), (II) und (III)
R¹,R²,R³,R⁴,R⁵ und R⁶ unabhängig voneinander jeweils für Wasserstoff oder Methyl, R⁷ für Methyl, und a, b und c unabhängig voneinander jeweils für eine Zahl von 1 bis 200, insbesondere 1 bis 20, besonders bevorzugt 1 bis 5, außerordentlich bevorzugt a und b = 1, bedeuten und c eine Zahl von 2 bis 10 ist,
enthalten, wobei die in den suspendierten Feststoffpartikeln enthaltene Gesamtmenge des besagten anionischen Polyesters im Zahlenmittel
zwischen 1 und 25, insbesondere zwischen 1 bis 10, besonders bevorzugt zwischen 1 und 5, Struktureinheiten der Formel (I) zwischen 0,05 und 15, insbesondere zwischen 0,1 und 10 und besonders bevorzugt zwischen 0,25 und 3, Struktureinheiten des Formel (II) zwischen 1 und 30, insbesondere zwischen 2 und 15, besonders bevorzugt zwischen 3 und 10, Struktureinheiten der Formel (III).

Derartige Polyester können beispielsweise erhalten werden durch Polykondensation von Terephthalsäuredialkylester, 5-Sulfoisophthalsäuredialkylester, Alkylenglykolen, optional Polyalkylenglykolen (bei a, b und/oder c > 1) und einseitig endverschlossenen Polyalkylenglykolen (entsprechend Einheit der Formel II).

Als Einheit der Formel (I) kommt ein Ester von Terephthalsäure mit einem oder mehreren difunktionellen, aliphatischen Alkoholen in Frage, bevorzugt verwendet werden hierbei Ethylenglykol (R¹ und R² jeweils H) und/oder 1,2-Propylenglykol (R¹ = H und R² = -CH₃ oder umgekehrt) und/oder kürzerkettige Polyethylenglykole und/oder Poly[ethlyenglykol-co-propylenglykol] mit zahlenmittleren Molekulargewichten von 100 bis 2000 g/mol.

Als nichtionisch einseitig verschlossene Polyalkylenglykolmonoalkylether gemäß Einheit der Formel (II) bevorzugt verwendet werden Poly[ethlyenglykol-co-propylenglykol]-monomethylether mit zahlenmittleren Molekulargewichten von 100 bis 2000 g/mol und Polyethylenglykolmonomethylether der allgemeinen Formel CH₃-O-(C₂H₄O)ₙ-H mit n = 1 bis 99, insbesondere 1 bis 20 und besonders bevorzugt 2 bis 10. Da durch Einsatz solcher einseitig verschlossener Ether das theoretische bei quantitativem Umsatz zu erzielende maximale mittlere Molekulargewicht einer Polyesterstruktur vorgegeben wird, gilt als bevorzugte Einsatzmenge der Struktureinheit (II) diejenige, die zum Erreichen bevorzugten mittleren Molekulargewichte (*vide supra*) notwendig ist.

Als Einheit der Formel (III) kommt ein Ester von 5-Sulfoisophthalsäure mit einem oder mehreren difunktionellen, aliphatischen Alkoholen in Frage, bevorzugt verwendet werden hierbei die vorgenannten.

In einer speziellen Ausführungsform der Erfindung enthält der erfindungsgemäß enthaltene anionische Polyester zusätzlich mindestens eine Struktureinheit der Formel IV,

-[Polyfunktionelle Einheit-]_{g} (IV)

in der
g für eine Zahl von 0 bis 5 steht, Polyfunktionelle Einheit für eine Einheit mit 3 bis 6 freien Valenzen, die über Estergruppen an die Polymerstruktur binden können.

Außer linearen Polyestern, die aus den Struktureinheiten (I), (II) und (III) resultieren, ist erfindungsgemäß auch der Einsatz vernetzter oder verzweigter Polyesterstrukturen. Ausgedrückt wird dies durch die Anwesenheit einer vernetzend wirkenden Polyfunktionellen Struktureinheit (IV) mit mindestens drei bis maximal 6 zur Veresterungsreaktion befähigten funktionellen Gruppen. Als funktionelle Gruppierungen können dabei beispielsweise Säure-, Alkohol-, Ester-, Anhydrid- oder Epoxygruppen benannt werden. Dabei sind auch unterschiedliche Funktionalitäten in einem Molekül möglich. Als Beispiele können hierfür Zitronensäure, Äpfelsäure, Weinsäure und Gallussäure, besonders bevorzugt 2,2-Dihydroxymethylpropionsäure dienen. Weiterhin können mehrwertige Alkohole wie Pentaerythrol, Glycerin, Sorbitol und/oder Trimethylolpropan eingesetzt werden. Auch kann es sich dabei um mehrwertige aliphatische oder aromatische Carbonsäuren, wie Benzol-1,2,3-tricarbonsäure (Hemimellithsäure), Benzol-1,2,4-tricarbonsäure (Trimellithsäure), oder Benzol-1,3,5-tricarbonsäure (Trimesithsäure) handeln. Der Gewichtsanteil an vernetzenden Monomeren, bezogen auf die Gesamtmasse des anionischen Polyesters, kann beispielsweise bis zu 10 Gew.-%, inbesondere bis 5 Gew.-% und besonders bevorzugt bis zu 3 Gew.-% betragen.

Bevorzugt werden erfindungsgemäß festförmige anionische Polyester, die Erweichungspunkte oberhalb 40 °C aufweisen, eingesetzt; sie haben bevorzugt einen Erweichungspunkt zwischen 50 und 200°C, besonders bevorzugt zwischen 80°C und 150°C und außerordentlich bevorzugt zwischen 100°C und 120°C.

Es ist erfindungsgemäß bevorzugt, wenn der suspendierte partikuläre Feststoff einen Formfaktor von wenigstens 0,80, 0,84, 0,86, 0,87, 0,88, 0,89, 0,91, 0,92, 0,93, 0,94, 0,96, 0,97, 0,98, 0,99 oder 1 aufweisen. Der Formfaktor (shape factor) ist durch moderne Partikelmeßtechniken mit digitaler Bildverarbeitung präzise bestimmbar. Eine typische Partikelformanalyse, wie sie beispielsweise mit dem Camsizer®-System von Retsch Technology oder auch mit dem KeSizer® der Firma Kemira durchführbar ist, beruht darauf, daß die Partikel beziehungsweise das Schüttgut mit einer Lichtquelle bestrahlt werden und die Partikel als Projektionsflächen erfaßt, digitalisiert und computertechnisch verarbeitet werden. Die Bestimmung der Oberflächenkrümmung erfolgt durch ein optisches Meßverfahren, bei dem der "Schattenwurf" der zu untersuchenden Teile bestimmt wird und in einen entsprechenden Formfaktor umgerechnet wird: Shape factor = 4^{∗}pi^{∗}A/U (A=Projektionsfläche des Partikels; U=Umfang des Partikels). Für Kugeln gilt Shape factor = 1; davon abweichende Partikelformen besitzen einen Wert < 1. Das zugrundeliegende Prinzip zur Bestimmung des Formfaktors wurde beispielsweise von Gordon Rittenhouse in "A visual method of estimating twodimensional sphericity" im Journal of Sedimentary Petrology, Vol. 13, Nr. 2, Seiten 79-81 beschrieben. Die Meßgrenzen dieses optischen Analyseverfahrens betragen 15 µm beziehungsweise 90 mm.

Prinzipiell kann besagter suspendierter partikulärer Feststoff durch Versprühen und anschließendes Trockenverdichten, durch Granulation, Sprühagglomeration oder durch Extrusion und gegebenenfalls Verrundung erhalten werden.

Verwendete anionische Polyester sind von fester Konsistenz und können bevorzugt in einfacher Weise zu Pulver vermahlen oder zu Granulaten definierter Partikelgrößen kompaktiert bzw. agglomeriert werden. Die Granulierung kann in der Weise erfolgen, dass die bei der Synthese als Schmelze anfallenden Copolymere durch Abkühlen in einem kühlen Gasstrom, beispielsweise Luft- oder Stickstoff, oder durch Aufbringen auf eine Schuppenwalze oder auf ein Laufband zu Schuppen oder Flakes verfestigt werden. Dieses Grobgut kann gegebenenfalls beispielsweise im Walzenstuhl oder in der Siebmühle weiter vermahlen werden, der sich eine Siebung und eine Verrundung anschließen kann. Die Granulierung kann auch in der Weise erfolgen, dass die Polyester nach der Erstarrung zu Pulver vermahlen werden und anschließend durch Kompaktierung beziehungsweise Agglomerierung und ein Verrundung in Granulate mit definierten Partikelgrößen umgesetzt werden.

Das Sprühagglomerationsverfahren bietet den Vorteil, daß die Herstellung besagter Partikel und eine Rundung in einem Schritt erfolgen. Beim Sprühagglomerationsverfahren werden in einem Wirbelbett die Teilchen gleichzeitig agglomeriert und getrocknet. Durch das zwiebelartige Aufbringen der Substanzen sowie durch die Bewegung der Teilchen entstehen sehr dichte und runde Partikel.

Ein weiteres mögliches Verfahren zur Herstellung besagter Partikel, daß zunächst rieselfähige partikuläre Teilchen, vorzugsweise mittels Extrusion, hergestellt werden und die partikulären Teilchen anschließend, vorzugsweise mit Hilfe eines Spheronizers, einer Drehtrommel, einer Dragiertrommel oder eines Dragiertellers gerundet werden. Dafür geeignete Extrusionsverfahren sind im Stand der Technik bekannt und werden beispielsweise in der internationalen Patentanmeldung WO 00/23556, in der internationalen Patentanmeldung WO 99/13045 oder auch in der europäischen Patentanmeldung EP 0 665 879 beschrieben.

Die Extrusion erfolgt besonders bevorzugt unter Verwendung eines Zwei-Wellen-Extruders. Hierbei werden zunächst die für das jeweilige partikuläre Teilchen vorgesehenen Rohstoffe inklusive besagter anionischer Polyester gemischt und im Extruder anschließend homogenisiert und plastifiziert. Durch Schneiden der extrudierten Masse am Extruderkopf können beispielsweise zylindrisch geformte Partikel erhalten werden. Die so erhaltenen partikulären Teilchen werden in einem zweiten Verfahrensschritt bevorzugt gerundet. Die Rundung erfolgt dabei bevorzugt so, daß diese nach dem Rundungsprozeß einen Formfaktor von wenigstens 0,80 aufweisen.

Vorzugsweise werden die partikulären Teilchen beziehungsweise das Extrudat mit Hilfe eines sogenannten Spheronizers, einer Drehtrommel, einer Dragiertrommel oder eines Dragiertellers gerundet.

Gewünschtenfalls kann man, vorteilhaft während des Verrundungsschrittes, auf die Oberfläche des suspendierten partikulären Feststoffes Farbstoffe aufbringen, wobei die Partikel verschiedenfarbig eingefärbt werden können.

In einer Ausführungsform der Erfindung werden die besagten Partikel mit einer nicht-weißen Farbe gefärbt. Als Farbstoffe bevorzugt sind dabei Acid Red 18 (CI 16255), Acid Red 26, Acid Red 27, Acid Red 33, Acid Red 51, Acid Red 87, Acid Red 88, Acid Red 92, Acid Red 95, Acid Red 249 (CI 18134), Acid Red 52 (CI 45100), Acid Violet 126, Acid Violet 48, Acid Violet 54, Acid Yellow 1, Acid Yellow 3 (CI 47005), Acid Yellow 11, Acid Yellow 23 (CI 19140), Acid Yellow 3, Direct Blue 199 (CI 74190), Direct Yellow 28 (CI 19555), Food Blue 2 (CI 42090), Food Blue 5:2 (CI 42051:2), Food Red 7(01 16255), Food Yellow 13 (CI 47005), Food Yellow 3 (CI 15985), Food Yellow 4 (CI 19140), Reactive Green 12, Solvent Green 7 (CI 59040). Besonders bevorzugte Farbstoffe sind wasserlösliche Säurefarbstoffe, beispielsweise Food Yellow 13 (Acid Yellow 3, CI 47005), Food Yellow 4 (Acid Yellow 23, CI 19140), Food Red 7 (Acid Red 18, CI 16255), Food Blue 2 (Acid Blue 9, CI 42090), Food Blue 5 (Acid Blue 3, CI 42051), Acid Red 249 (CI 18134), Acid Red 52 (CI 45100), Acid Violet 126, Acid Violet48, Acid Blue 80(01 61585), Acid Blue 182, Acid Blue 182, Acid Green 25 (Cl 61570), Acid Green 81. Ebenso bevorzugt eingesetzt werden auch wasserlösliche Direkt-Farbstoffe, beispielsweise Direct Yellow 28 (CI 19555), Direct Blue 199 (CI 74190) und wasserlösliche ReaktivFarbstoffe, beispielsweise Reactive Green 12, sowie die Farbstoffe Food Yellow 3 (CI 15985), Acid Yellow 184. Ebenso bevorzugt eingesetzt werden wässrige Dispersionen folgender PigmentFarbstoffe, Pigment Black 7 (CI 77266), Pigment Blue 15 (CI 74160), Pigment Blue 15:1 (CI 74160), Pigment Blue 15:3 (CI 74160), Pigment Green 7 (CI 74260), Pigment Orange 5, Pigment Red 112 (CI 12370), Pigment Red 112 (CI 12370), Pigment Red 122 (CI 73915), Pigment Red 179 (CI 71130), Pigment Red 184 (CI 12487), Pigment Red 188 (CI 12467), Pigment Red 4 (CI 12085), Pigment Red 5 (CI 12490), Pigment Red 9, Pigment Violet 23 (CI 51319), Pigment Yellow 1 (CI 28 11680), Pigment Yellow 13 (CI 21100), Pigment Yellow 154, Pigment Yellow 3 (CI 11710), Pigment Yellow 74, Pigment Yellow 83 (CI 21108), Pigment Yellow 97. In bevorzugten Ausführungsformen werden folgende Pigmentfarbstoffe in Form von Dispersionen eingesetzt: Pigment Yellow 1 (CI 11680), Pigment Yellow 3 (CI 11710), Pigment Red 112 (CI 12370), Pigment Red 5 (CI 12490), Pigment Red 181 (CI 73360), Pigment Violet 23 (CI 51319), Pigment Blue 15:1 (CI 74160), Pigment Green 7 (CI 74260), Pigment Black 7 (CI 77266). In ebenfalls bevorzugten Ausführungsformen werden wasserlösliche Polymerfarbstoffe, beispielsweise Liquitint RTM, Liquitint Blue HP.RTM., Liquitint Blue 65.RTM., Liquitint Patent Blue.RTM., Liquitint Royal Blue.RTM., Liquitint Experimental Yellow 8949- 43.RTM., Liquitint Green HMC.RTM.,Liquitint Yellow II.RTM. und Mischungen daraus eingesetzt.

Die suspendierten partikulären Feststoffe können vollständig aus mindestens einem besagten anionischen Polyester (*vide supra*) bestehen. Zusätzlich können die suspendierten festförmigen Partikel neben dem besagten anionischen Polyester im Prinzip beliebige übliche Inhaltsstoffe von Wasch- beziehungsweise Reinigungsmitteln enthalten, wobei hier wie auch sonst darauf zu achten ist, dass aus Gründen der ansonsten verringerten Lagerstabilität der Mittel miteinander unverträgliche Inhaltsstoffe nicht gemeinsam in einen Partikel inkorporiert werden.

In einer weiteren Ausführungsform enthalten die suspendierten festförmigen Partikel zusätzlich mindestens einen weiteren Inhaltsstoff enthalten.

Es ist erfindungsgemäß besonders bevorzugt, wenn die suspendierten festförmigen Partikel zusätzlich mindestens einen weiteren Inhaltsstoff ausgewählt aus Weichmacher, Plastifizierhilfststoff, Enzym, Enzymstabilisator, Komplexbildner für metalle, beispielsweise Aminopolycarbonsäuren, Aminohydroxypolycarbonsäuren, Polyphosphonsäuren und/oder Aminopolyphosphonsäuren, Vergrauungsinhibitor, beispielsweise Celluloseether, Farbübertragungsinhibitor, beispielsweise Polyvinylpyrrolidon oder Polyvinylpyrdin-N-oxid, Schauminhibitor, beispielsweise Organopolysiloxane oder Paraffine, optischer Aufheller, beispielsweise Stilbendisulfonsäurederivate, Riechstoffe oder Dichtestellmittel, oder Mischungen aus diesen.

Dabei ist es erfindungsgemäß besonders bevorzugt, wenn die suspendierten festförmigen Partikel zusätzlich mindestens einen weiteren polymeren Inhaltsstoff (insbesondere ausgewählt aus polymeren Vergrauungsinhibitoren, polymeren Farbübertragungsinhibitoren) enthalten.

Es ist erfindungsgemäß bevorzugt, wenn die suspendierten festförmigen Partikel zusätzlich mindestens einen Plastifizierhilfsstoff enthalten, ausgewählt aus Triethylcitrat, Triacetin, 1,2-Propylenglykol, Glyzerin, 2-Methyl-1,3-propylenglykol, Wasser oder Mischungen aus diesen.

Plastifizierhilfststoff ist bevorzugt in einer Gesamtmenge von 0 bis 15 Gew.-% in den besagten suspendierten festförmigen Partikeln enthalten.

Gegebenenfalls in den besagten suspendierten festförmigen Partikeln zusätzlich enthaltene Enzyme werden vorzugsweise aus der Gruppe umfassend Protease, Amylase, Pullulanase, Mannanase, Lipase, Cellulase, Hemicellulase, Oxidase, Peroxidase, Pektatlyase oder Mischungen aus diesen ausgewählt. In erster Linie kommt aus Mikroorganismen, wie Bakterien oder Pilzen, gewonnene Protease in Frage. Sie kann in bekannter Weise durch Fermentationsprozesse aus geeigneten Mikroorganismen gewonnen werden. Proteasen sind im Handel beispielsweise unter den Namen BLAP®, Savinase®, Esperase®, Maxatase®, Optimase®, Alcalase®, Durazym® oder Maxapem® erhältlich.

Die einsetzbare Lipase kann aus Humicola lanuginosa, aus Bacillus-Arten, aus Pseudomonas-Arten, aus Fusarium-Arten, wie beispielsweise in der europäischen Patentanmeldung, aus Rhizopus-Arten oder aus Aspergillus-Arten gewonnen werden. Geeignete Lipasen sind beispielsweise unter den Namen Lipolase®, Lipozym®, Lipomax®, Amano®-Lipase, Toyo-Jozo®-Lipase, Meito®-Lipase und Diosynth®-Lipase im Handel erhältlich. Geeignete Amylasen sind beispielsweise unter den Namen Maxamyl® und Termamyl® handelsüblich.

Die einsetzbare Cellulase kann ein aus Bakterien oder Pilzen gewinnbares Enzym sein, welches ein pH-Optimum vorzugsweise im schwach sauren bis schwach alkalischen Bereich von 6 bis 9,5 aufweist.

Zu den geeigneten Schauminhibitoren gehören langkettige Seifen, insbesondere Behenseife, Fettsäureamide, Paraffine, Wachse, Mikrokristallinwachse, Organopolysiloxane und deren Gemische, die darüberhinaus mikrofeine, gegebenenfalls silanierte oder anderweitig hydrophobierte Kieselsäure enthalten können. Zum Einsatz in erfindungsgemäß suspendierten, besagten festförmigen Partikeln sind derartige Schauminhibitoren vorzugsweise an granulare, wasserlösliche Trägersubstanzen gebunden.

Ferner kann der besagte erfindungsgemäß suspendierte, festförmige Partikel mindestens einen Vergrauungsinhibitor enthalten. Vergrauungsinhibitoren haben die Aufgabe, den von der Faser abgelösten Schmutz in der Flotte suspendiert zu halten und so das Vergrauen der Fasern zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel teilhydrolysierte Stärke. Na-Carboxymethylcellulose, Methylcellulose, Methylhydroxyethylcellulose und deren Gemische werden bevorzugt eingesetzt.

Dichtestellmittel werden zur Einstellung der Dichte eines festförmigen Partikels eingesetzt. Bevorzugt weisen die Dichtestellmittel eine geringere Dichte als der Stoff/das Stoffgemisch auf, in dessen Partikel das Dichtestellmittel eingearbeitet werden soll. Der Einsatz der Dichtestellmittel verhindert beispielsweise die Sedimentation einer festförmigen Partikelsorte in einem Partikelgemisch mit verschiedenen festförmigen Partikeln unterschiedlicher Dichte dadurch, dass die Dichte aller Partikel nahezu homogen eingestellt wird. Ebenso kann die Sedimentierung von in einem flüssigen Medium suspendierten Partikeln verringert werden.

Erfindungsgemäß bevorzugte Dichtestellmittel sind ausgewählt aus Glaspartikeln und/oder porösen Partikeln mit mindestens einem Hohlraum.

Es ist erfindungsgemäß besonders bevorzugt, wenn die besagten suspendierten, festförmigen Partikel weniger als 5 Gew.-%, besonders bevorzugt weniger als 2 Gew.-%, ganz besonders bevorzugt weniger als 1 Gew.-% Tensid enthalten (bezogen auf das Gewicht der besagten Partikel nach Lagerung im Klimaschrank für 24 Stunden bei 30°C und 50 % relativer Luftfeuchtigkeit und vor der Einarbeitung in die flüssige Phase des erfindungsgemäßen Mittels).

Ein ganz bevorzugter, in dem erfindungsgemäß Mittel suspendierter partikulärer Feststoff nach enthält bezogen auf das Gesamtgewicht
i) 50 bis 99 Gew.-% mindestens eines besagten Polyesters (insbesondere ausgewählt aus vorgenanten, bevorzugten Ausführungsformen des (besonders bevorzugt anionischen) Polyesters), und
ii) 1 bis 15 Gew.-% mindestens eines Plastifizierhilfsstoffs, (bevorzugt ausgewählt aus Triethylcitrat, Triacetin, 1,2-Propylenglykol, Glyzerin, 2-Methyl-1,3-propylenglykol, Wasser oder Mischungen aus diesen), und
iii) 0 bis 49 Gew.-% mindestens eines weiteren Inhaltsstoffes, ausgewählt aus Enzym, Enzymstabilisator, Komplexbildner für Schwermetalle, beispielsweise Aminopolycarbonsäuren, Aminohydroxypolycarbonsäuren, Polyphosphonsäuren und/oder Aminopolyphosphonsäuren, Vergrauungsinhibitor, beispielsweise Celluloseether, Farbübertragungsinhibitor, beispielsweise Polyvinylpyrrolidon oder Polyvinylpyrdin-N-oxid, Schauminhibitor, beispielsweise Organopolysiloxane oder Paraffine, optischer Aufheller, beispielsweise Stilbendisulfonsäurederivate, Riechstoffe, Dichtestellmittel, Farbstoff oder Mischungen aus diesen.

Die flüssige Phase des erfindungsgemäßen Wasch- oder Reinigungsmittel weist bevorzugt eine Fließgrenze auf. Die Fließgrenze bezeichnet die kleinste Spannung (Kraft pro Fläche), oberhalb derer ein plastischer Stoff sich rheologisch wie eine Flüssigkeit verhält. Sie wird in Pascal (Pa) angegeben. Es ist erfindungsgemäß bevorzugt, wenn die flüssige Phase eine Fließgrenze von mindestens 0,4 Pa (23°C), besonders bevorzugt von mindestens 0,6 Pa (23°C), aufweist.

Die Fließgrenzen der Wasch- oder Reinigungsmittel wurden mit einem Rotationsrheometer der Firma TA-Instruments, Typ AR G2 gemessen. Hierbei handelt es sich um ein so genanntes schubspannungskontrolliertes Rheometer.

Zur Messung einer Fließgrenze mit einem schubspannungskontrollierten Rheometer sind in der Literatur verschiedene Verfahren beschrieben, die dem Fachmann bekannt sind.

Zur Bestimmung der Fließgrenzen im Rahmen der vorliegenden Erfindung wurde bei 23 °C folgendermaßen vorgegangen:
Die Proben wurden im Rheometer mit einer mit der Zeit ansteigenden Schubspannung s(t) beaufschlagt. Beispielsweise kann die Schubspannung im Laufe von 10 Minuten vom kleinstmöglichen Wert (z.B. 2 mPa) auf z.B. 10 Pa gesteigert werden. Als Funktion dieser Schubspannung wird die Deformation γ der Probe gemessen. Die Deformation wird in einem doppellogarithmischen Plot gegen die Schubspannung aufgetragen. Sofern die untersuchte Probe eine Fließgrenze aufweist, kann man in diesem Plot deutlich zwei Bereiche unterscheiden. Unterhalb einer gewissen Schubspannung findet man eine rein elastische Deformation. Die Steigung der Kurve γ (σ) (log-log-Plot) in diesem Bereich ist eins. Oberhalb dieser Schubspannung beginnt der Fließbereich und die Steigung der Kurve ist sprunghaft höher. Diejenige Schubspannung bei der das Abknicken der Kurve erfolgt, also der Übergang von der elastischen in eine plastische Deformation, markiert die Fließgrenze. Eine bequeme Bestimmung des Knickpunktes ist durch Anlegen von Tangenten an die beiden Kurventeile möglich. Proben ohne Fließgrenze weisen keinen charakteristischen Knick in der Funktion γ(σ) auf.

Es ist erfindungsgemäß besonders bevorzugt, wenn die flüssige Phase des erfindungsgemäßen Wasch- oder Reinigungsmittels
- Wasser,
- 5 bis 20 Gew.-% anionisches Tensid ausgewählt aus der Gruppe bestehend aus Sulfonat-Tensiden, Sulfat-Tensiden und Mischungen daraus,
- 0,4 bis 6 Gew.-% eines Co-Tensids ausgewählt aus der Gruppe bestehend aus alkoxylierten C₈-C₁₈-Fettalkoholen mit einem Alkoxylierungsgrad ≤ 3, aliphatischen C₆-C₁₄-Alkoholen, aromatischen C₆-C₁₄-Alkoholen, aliphatischen C₆-C₁₂-Dialkoholen, Monoglyceride von C₁₂-C₁₈-Fettsäuren, Monoglycerinether von C₈C₁₈-Fettalkoholen und Mischungen daraus,
- 1 bis 15 Gew.-% vom besagten Co-Tensid verschiedenes nichtionisches Tensid (bevorzugt ausgewählt aus der Gruppe bestehend aus alkoxylierten Fettalkoholen mit einem Alkoxylierungsgrad ≥ 4, alkoxylierten Fettsäurealkylestern, Fettsäureamiden, alkoxylierten Fettsäureamiden, Polyhydroxyfettsäureamiden, Alkylphenolpolyglycolethern, Aminoxiden, Alkylpolyglucosiden und Mischungen daraus), und
- 0,5 bis 10 Gew.-% eines anorganischen Salzes
enthält.

Es hat sich gezeigt, dass durch Zugabe ausgewählter Mengen eines anorganischen Salzes und eines spezifischen Co-Tensids zu einer anionische und nichtionische Tenside enthaltenden flüssigen Phase, ein Wasch- oder Reinigungsmittel mit Fließgrenze erhalten wird, in das sich die erfindungsgemäßen, anionischen Polyester-haltigen Feststoffpartikel besonders stabil einarbeiten lassen. Dieses Wasch- oder Reinigungsmittel ist ohne Zusatz eines polymeren Verdickungsmittels in der Lage, Partikel stabil zu dispergieren. Die Möglichkeit, auf polymere Verdickungsmittel verzichten zu können, hat nicht nur den Vorteil, dass die Mittel einfacher und kostengünstiger hergestellt werden können, sondern zusätzlich können unerwünschte Nebeneffekte eines polymeren Verdickungsmittels, wie Vergrauung bei der Behandlung von Textilien, vermieden werden. Entsprechend ist in einer bevorzugten Ausführungsform das Wasch- oder Reinigungsmittel frei von polymerem Verdickungsmittel. Ferner ist das Wasch- oder Reinigungsmittel auch ohne Zusatz eines sonstigen polymeren Stabilisators oder Dispergators stabil. Zudem können die Wasch- oder Reinigungsmittel problemlos in maschinellen Wasch- oder Reinigungsmitteln eingesetzt werden, da ihr Gehalt an anorganischem Salz im Vergleich zu im Stand der Technik bekannten Wasch- oder Reinigungsmittel deutlich reduziert ist.

Es ist bevorzugt, dass das anionische Tensid ausgewählt ist aus der Gruppe bestehend aus C₉₋₁₃-Alkylbenzolsulfonaten, Olefinsulfonaten, C₁₂₋₁₈-Alkansulfonaten, Estersulfonaten, Alk(en)ylsulfaten, Fettalkoholethersulfaten und Mischungen daraus.

Es hat sich gezeigt, dass sich diese Sulfonat- und Sulfat-Tenside besonders gut zur Herstellung stabiler Flüssigwaschwaschmittel mit Fließgrenze eignen.

Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch C₁₂₋₁₈-Alkansulfonate und die Ester von α-Sulfofettsäuren (Estersulfonate), zum Beispiel die α-sulfonierten Methylester der hydrierten Kokos-, Palmkern- oder Talgfettsäuren.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate sind geeignete anionische Tenside.

Auch Fettalkoholethersulfate, wie die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-wAlkohole mit im Durchschnitt 3,5 Mol Ethylenoxid (EO) oder C₁₂₋₁₈-Fettalkohole mit 1 bis 4 EO, sind geeignet.

Es ist bevorzugt, dass das flüssige Wasch- oder Reinigungsmittel eine Mischung aus Sulfonat- und Sulfat-Tensiden enthält. In einer besonders bevorzugten Ausführungsform enthält das flüssige Wasch- oder Reinigungsmittel C₉₋₁₃-Alkylbenzolsulfonate und Fettalkoholethersulfate als anionisches Tensid. Das Verhältnis der Sulfat-Tenside zu Sulfonat-Tensiden liegt vorzugsweise im Bereich von 3:1 bis 1:3 und mehr bevorzugt im Bereich von 3:1 bis 1:1. In einer besonders bevorzugten Ausführungsform enthält das flüssige Wasch- oder Reinigungsmittel Fettalkoholethersulfate und C₉₋₁₃-Alkylbenzolsulfonate im Verhältnis 2:1.

Zusätzlich zu dem anionischen Tensid kann das flüssige Wasch- oder Reinigungsmittel auch Seifen enthalten. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside sowie die Seifen können in Form ihrer Natrium-, Kalium- oder Magnesium- oder Ammoniumsalze vorliegen. Vorzugsweise liegen die anionischen Tenside in Form ihrer Natriumsalze vor. Weitere bevorzugte Gegenionen für die anionischen Tenside sind auch die protonierten Formen von Cholin, Triethylamin, Monoethanolamin oder Methylethylamin.

Die Menge an Seife in dem flüssigen Wasch- oder Reinigungsmittel beträgt vorzugsweise bis zu 5 Gew.-% und mehr bevorzugt bis zu 2 Gew.-%, bezogen auf die Gesamtmenge an Wasch- oder Reinigungsmittel.

Es ist erfindungsgemäß bevorzugt, wenn das erfindungsgemäße Mittel als Co-Tensid mindestens eine Verbindung ausgewählt aus alkoxyliertem C₈-C₁₈-Fettalkohol mit einem Alkoxylierungsgrad ≤ 3, aliphatischen C₆-C₁₄-Alkoholen, Monoglyceriden von C₁₂-C₁₈-Fettsäuren oder Mischugen daraus, enthält.

Als alkoxylierter C₈-C₁₈-Fettalkohol mit einem Alkoxylierungsgrad ≤ 3 kommt insbesondere mindestens ein entsprechend alkoxylierter Fettalkohol in Frage, der einen Ethoxylierungsgrad ≤ 3 hat.

Ganz besonders bevorzugte sind alkoxylierte C₈-C₁₅-Fettalkohole mit einem Alkoxylierungsgrad ≤ 3, wobei wiederum am bevorzugtesten mindestens ein entsprechend alkoxylierter C₈-C₁₅-Fettalkohol in Frage kommt, der einen Ethoxylierungsgrad ≤ 3 hat.

Typische Beispiele für Monoglycerinether von C₁₂₋C₁₈-Fettalkoholen sind solche auf Basis von Lauylalkohol, Isotridecylalkohol, Myristylalkohol, Palmitylalkohol, Palmoleylalkohol, Stearylalkohol, Isostearylalkohol, Öleylalkohol, Linolylalkohol, Linolenylalkohol, sowie deren technische Mischungen.

Ferner ist es besonders bevorzugt, wenn das Co-Tensid eine Kombination aus mindestens einem alkoxylierten C₈-C₁₈-Fettalkohol mit einem Alkoxylierungsgrad ≤ 3 und mindestens einem aliphatischen C₆-C₁₄-Alkoholen umfasst. Dabei ist es wiederum ganz besonders bevorzugt, wenn das erfindungsgemäße Mittel als Co-Tensid eine Gesamtmenge von 0,5 bis 6 Gew.-% einer Kombination aus mindestens einem alkoxylierten C₈-C₁₈-Fettalkohol mit einem Alkoxylierungsgrad ≤ 3 und mindestens einem aliphatischen C₆-C₁₄-Alkohol enthält. Ganz besonders bevorzugt enthält das erfindungsgemäße Mittel jeweils ein einer Gesamtmenge von 0,4 bis 5,0 Gew.-% mindestens einen alkoxylierten C₈-C₁₈-Fettalkohol mit einem Alkoxylierungsgrad ≤ 3 und 0,1 bis 1,0 Gew.-% mindestens einen aliphatischen C₆-C₁₄-Alkohol, insbesondere mindestens einen verzweigten aliphatischen C₆-C₁₄-Alkohol.

Das Wasch- oder Reinigungsmittel enthält neben dem anionischen Tensid auch nichtionisches Tensid. Das nichtionische Tensid umfasst alkoxylierte Fettalkohole, alkoxylierte Fettsäurealkylester, Fettsäureamide, alkoxylierte Fettsäureamide, Polyhydroxyfettsäureamide, Alkylphenolpolyglycolether, Aminoxide, Alkylpolyglucoside und Mischungen daraus.

Der Gehalt an nichtionischem Tensid beträgt bevorzugt 3 bis 15 Gew.-% und besonders bevorzugt 4 bis 10 Gew.-%, jeweils bezogen auf das gesamte Wasch- oder Reinigungsmittel.

Als nichtionisches Tensid werden vorzugsweise alkoxylierte, vorteilhafterweise ethoxylierte, insbesondere primäre Alkohole mit vorzugsweise 8 bis 18 C-Atomen und durchschnittlich 4 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 4 bis 8 EO pro Mol Alkohol bevorzugt. Zu den bevorzugten ethoxylierten Alkoholen gehören beispielsweise C₁₂₋₁₄-Alkohole mit 4 EO oder 7 EO, C₉₋₁₁-Alkohol mit 7 EO, C₁₃₋₁₅-Alkohole mit 5 EO, 7 EO oder 8 EO, C_{12- 18}-Alkohole mit 5 EO oder 7 EO und Mischungen aus diesen. Bevorzugte Alkoholethoxylate weisen eine eingeengte Homologenverteilung auf (narrow range ethoxylates, NRE). Zusätzlich zu diesen oder anstelle dieser bevorzugten nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind erfindungsgemäß einsetzbar. Geeignet sind ferner auch eine Mischung aus einem (stärker) verzweigten ethoxylierten Fettalkohol und einem unverzweigten ethoxylierten Fettalkohol, wie beispielsweise eine Mischung aus einem C₁₆₋₁₈-Fettalkohol mit 7 EO und 2-Propylheptanol mit 7 EO. Insbesondere bevorzugt enthält das Wasch-, Reinigungs-, Nachbehandlungs- oder Waschhilfsmittel einen C₁₂₋₁₈-Fettalkohol mit 7 EO oder einen C₁₃₋₁₅-Oxoalkohol mit 7 EO als nichtionisches Tensid.

Bevorzugt als nichtionisches Tensid eingesetzte Aminoxide weisen die Formel R¹R²R³NO auf, worin R¹, R² und R³ unabhängig voneinander einen gegebenenfalls substituiertem C₁ to C₃₀ Kohlenwasserstoffrest, bevorzugt eine lineare oder verzweigte C₁₋₃₀ Alkylgruppe, ganz besonders bevorzugt eine lineare C₁₋₂₀ Alkylgruppe, bedeuten. In einer außerordentlich bevorzugten ausführungsform stehen R¹ und R² für eine C₁₋₄ Alkylgruppe, weiter bevorzugt für Methyl oder Ethyl, ganz bevorzugt für Methyl, und R³ ist eine C₈₋₂₀ Alkylgruppe, bevorzugt eine C₁₀₋₁₈ Alkylgruppe, am bevorzugtesten für eine C₁₂₋₁₆ Alkylgruppe.
In einer ganz bevorzugten Ausführungsform ist das Aminoxid ausgewählt aus C₁₂₋₁₄ Alkyl dimethylaminoxid.

Es ist besonders bevorzugt als nichtionisches Tensid 1 bis 15 Gew.-% eines vom besagten Co-Tensid verschiedenen nichtionischen Tensids ausgewählt aus alkoxylierten Fettalkoholen mit einem Alkoxylierungsgrad ≥ 4, Aminoxiden und Mischungen daraus, in den erfindungsgemäß Wasch- und Reinigungsmitteln einzusetzen.

Es ist bevorzugt, dass das anorganische Salz aus der Gruppe bestehend aus Natriumchlorid, Kaliumchlorid, Natriumsulfat, Natriumcarbonat, Kaliumsulfat, Kaliumcarbonat, Natriumhydrogencarbonat, Kaliumhydrogencarbonat, Calciumchlorid, Magnesiumchlorid und Mischungen daraus ausgewählt ist, da diese Salze sehr gut wasserlöslich sind.

Es ist erfindungsgemäß ganz besonders bevorzugt, wenn die flüssige Phase des erfindungsgemäßen Wasch- oder Reinigungsmittels
- Wasser,
- 5 bis 20 Gew.-% anionisches Tensid ausgewählt aus der Gruppe bestehend aus Sulfonat-Tensiden, Sulfat-Tensiden und Mischungen daraus,
- 0,4 bis 6 Gew.-% eines Co-Tensids ausgewählt aus einer Kombination mindestens eines alkoxylierten C₈-C₁₈-Fettalkoholes mit einem Alkoxylierungsgrad ≤ 3 und mindestens eines aliphatischen C₆-C₁₄-Alkohols,
- 1 bis 15 Gew.-% vom besagten Co-Tensid verschiedenes nichtionisches Tensid ausgewählt aus alkoxylierten Fettalkoholen mit einem Alkoxylierungsgrad ≥ 4, Aminoxiden und Mischungen daraus, und
- 0,5 bis 10 Gew.-% eines anorganischen Salzes
enthält.

Ein zweiter Gegenstand der Erfindung ist ein partikulärer Feststoff mit einem mittleren Partikeldurchmesser X_{50,3} (Volumenmittel) von 0,01 mm bis 3 mm, enthaltend bezogen auf das Gesamtgewicht
i) eine Gesamtmenge von 30 bis 100 Gew.-%, bevorzugt 50 bis 100 Gew.-%, besonders bevorzugt 75 bis 100 Gew.-%, mindestens eines anionischen Polyesters, enthaltend mindestens eine Struktureinheit der Formel (I), mindestens eine Struktureinheit der Formel (II) und mindestens eine Struktureinheit der Formel (III) 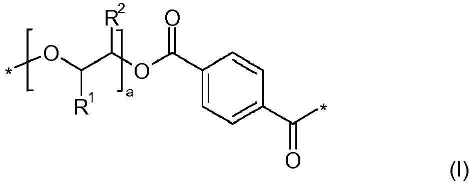 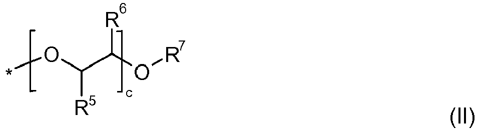 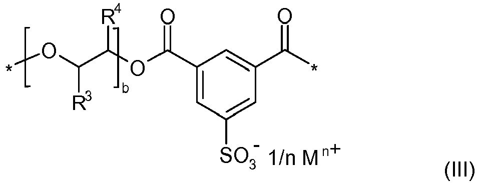 worin
   a, b und c unabhängig voneinander jeweils für eine Zahl von 1 bis 200 steht,
   1/n Mⁿ⁺ für ein Äquivalent eines Kations mit der Ladungszahl n steht mit n = 1, 2 oder 3, R¹,R²,R³,R⁴,R⁵ und R⁶ unabhängig voneinander jeweils für Wasserstoff oder eine C₁-C₁₈-n-Alkylgruppe oder C₃-C₁₈-iso-Alkylgruppe steht,
   R⁷ für eine lineare oder verzweigte C₁-C₃₀-Alkylgruppe oder für eine lineare oder verzweigte C₂-C₃₀-Alkenylgruppe, für eine Cycloalkylgruppe mit 5 bis 9 Kohlenstoffatomen, für eine C₆-C₃₀-Arylgruppe oder für eine C₆-C₃₀-Arylalkylgruppe steht,
ii) eine Gesamtmenge zwischen 0 bis 70 Gew.-%, insbesondere zwischen 0 bis 50 Gew.-%, besonders bevorzugt zwischen 0 bis 25 Gew.-%, mindestens eines weiteren Inhaltsstoffes, ausgewählt aus Weichmacher, Plastifizierhilfststoff, Enzym, Enzymstabilisator, Komplexbildner für Schwermetalle, beispielsweise Aminopolycarbonsäuren, Aminohydroxypolycarbonsäuren, Polyphosphonsäuren und/oder Aminopolyphosphonsäuren, Vergrauungsinhibitor, beispielsweise Celluloseether, Farbübertragungsinhibitor, beispielsweise Polyvinylpyrrolidon oder Polyvinylpyrdin-N-oxid, Schauminhibitor, beispielsweise Organopolysiloxane oder Paraffine, optischer Aufheller, beispielsweise Stilbendisulfonsäurederivate, Riechstoff, Dichtestellmitteloder Mischungen aus diesen.

Alle bevorzugten Ausführungsformen der im ersten Erfindungsgegenstand beschriebenen suspendierten Feststoffpartikel gelten auch für diesen zweiten Erfindungsgegenstand.

Ein dritter Erfindungsgegenstand ist die Verwendung des erfindungsgemäßen partikulären Feststoffs gemäß zweitem Erfindungsgegenstandes und einer flüssigen Phase, enthaltend Wasser und Tensid zur Herstellung eines flüssigen Wasch- und Reinigungsmittels.

Alle bevorzugten Ausführungsformen der im ersten Erfindungsgegenstand beschriebenen suspendierten Feststoffpartikel und der flüssigen Phase gelten auch für diesen dritten Erfindungsgegenstand.

Ein vierter Erfindungsgegenstand ist ein Verfahren zur Herstellung eines flüssigen Wasch- oder Reinigungsmittels, worin erfindungsgemäßer partikulärer Feststoff gemäß zweitem Erfindungsgegenstandes in einer flüssigen Phase, enthaltend Wasser und Tensid suspendiert wird.

Zu diesem Zweck wird bevorzugt die flüssige Phase vorgelegt und der besagte partikuläre Feststoff suspendiert. Hierzu eignen sich dem Fachmann bekannte Rühr- und Mischanlagen.

Alle bevorzugten Ausführungsformen der im ersten Erfindungsgegenstand beschriebenen suspendierten Feststoffpartikel und der flüssigen Phase gelten auch für diesen vierten Erfindungsgegenstand.

### Beispiele

### 1.0 Herstellung der Feststoffpartikel

Ein festförmiger anionischer Polyester wurde unter portionsweiser Zugabe geringer Mengen Wasser in einem Laborkneter geknetet, bis eine plastische Masse erhalten wurde. Anschließend wurde die Masse durch eine Düse von 1mm Durchmesser zu einem Strang gepresst, der Strang im Abstand von 1,5 mm geschnitten und die resultierenden Stücke verrundet und für 48h bei 20°C getrocknet.

Der eingesetzte anionische Polyester umfasst im Wesentlichen Struktureinheiten entsprechend der Formeln (I), (II) und (III), worin
R¹,R²,R³,R⁴,R^{s} und R⁶ unabhängig voneinander jeweils für Wasserstoff oder Methyl, R⁷ für Methyl, und a, b und c unabhängig voneinander jeweils für eine Zahl von 1 bis 5 stehen, und c eine Zahl von 2 bis 10 ist,
wobei die in den suspendierten Feststoffpartikeln enthaltene Gesamtmenge des besagten anionischen Polyesters im Zahlenmittel
zwischen 1 und 5, Struktureinheiten der Formel (I) zwischen 0,25 und 3 Struktureinheiten des Formel (II) und zwischen 3 und 10 Struktureinheiten der Formel (III) enthält.

Besagter anionischer Polyester war zu mehr als 95 Gew.-% in den resultierenden, verrundeten Feststoffpartikeln enthalten.

### 2.0 Herstellung eines flüssigen Waschmittels

Folgende Flüssigwaschmittel wurde durch vermischen der Komponenten hergestellt:

| | E1 | E2 |
|---|---|---|
| C₁₂-Alkylbenzolsulfonsäure | 6,00 | 6,00 |
| C₁₂₋₁₄-Alkylethersulfat mit 2 Einheiten Ethylenoxid | 9,59 | 6,00 |
| C₁₂₋₁₈ Fettsäure | 1,00 | 1,00 |
| C₁₂₋₁₈-Fettalkohol mit 7 Einheiten Ethylenoxid | 6,45 | 6,79 |
| Isotridecanol mit 3 Einheiten Ethylenoxid | 2,20 | 0,80 |
| Isotridecanol | 0,55 | 0,20 |
| Diethylentriaminpenta(methylenphosphonsäure) hepta Natriumsalz | 0,25 | 0,20 |
| Zitronensäure | 2,50 | 2,50 |
| NaOH | 2,24 | 2,24 |
| Entschäumer | 0,03 | 0,03 |
| 1,2-Propylenglykol | 0,72 | 3,00 |
| Ethanol | 0,06 | 0,22 |
| NaCl | 0,65 | 0,85 |
| K₂SO₄ | 2,00 | 2,00 |
| Tinopal® CBS-X | 0,10 | 0,10 |
| Amylase | 0,44 | 0,44 |
| Protease | 0,90 | 0,90 |
| Cellulase | 0,17 | 0,17 |
| Mannanase | 0,20 | 0,20 |
| Lipase | 0,20 | 0,20 |
| Pectatlyase | 0,02 | 0,02 |
| Parfum | 0,90 | 0,90 |
| Feststoffpartikel gemäß Beispiel 1 | 0,25 | 0,25 |
| Wasser | ad 100 | ad 100 |

Die Waschmittel waren lagerstabil. Die Feststoffpartikel lösten sich nicht im Waschmittel auf und waren stabil in der flüssigen Phase suspendiert.

## Patentansprüche

1. Flüssiges Wasch- oder Reinigungsmittel, enthaltend
(i) eine flüssige Phase, enthaltend mindestens ein Tensid und Wasser, und
(ii) in der flüssigen Phase suspendierte Feststoffpartikel mit einem mittleren Partikeldurchmesser X_{50,3}, Volumenmittel, von 0,01 mm bis 3 mm, enthaltend bezogen auf das Gewicht der Feststoffpartikel eine Gesamtmenge von 30 bis 100 Gew.-%, bevorzugt 50 bis 100 Gew.-%, besonders bevorzugt 75 bis 100 Gew.-%, mindestens eines anionischen Polyesters, enthaltend mindestens eine Struktureinheit der Formel (I) und mindestens eine Struktureinheit der Formel (II) und mindestens eine Struktureinheit der Formel (III), 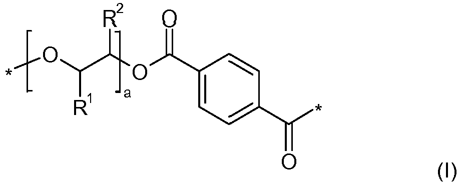 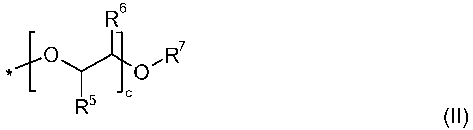 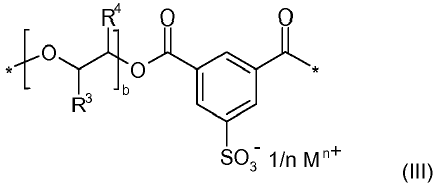 worin
a, b und c unabhängig voneinander jeweils für eine Zahl von 1 bis 200 steht,
R¹, R², R⁵ und R⁶ unabhängig voneinander jeweils für Wasserstoff oder eine C₁-C₁₈-n-Alkylgruppe oder C₃-C₁₈-iso-Alkylgruppe steht,
1/n Mⁿ⁺ für ein Äquivalent eines Kations mit der Ladungszahl n steht mit n = 1, 2 oder 3, R³ und R⁴ unabhängig voneinander jeweils für Wasserstoff oder eine C₁-C₁₈-n-Alkylgruppe oder C₃-C₁₈-iso-Alkylgruppe steht,
R⁷ für eine lineare oder verzweigte C₁-C₃₀-Alkylgruppe oder für eine lineare oder verzweigte C₂-C₃₀-Alkenylgruppe, für eine Cycloalkylgruppe mit 5 bis 9 Kohlenstoffatomen, für eine C₆-C₃₀-Arylgruppe oder für eine C₆-C₃₀-Arylalkylgruppe steht,
* für eine freie Valenz des betreffenden Strukturelements steht, die im Polymerrückgrat des Polyesters eine Esterverknüpfung ausbildet,
mit der Maßgabe, dass der mittlere Partikeldurchmesser X_{50,3} vor der Einarbeitung in die in die flüssige Phase des Mittels nach Lagerung der Feststoffpartikel im Klimaschrank für 24 Stunden bei 30°C und 50 % relativer Luftfeuchtigkeit gemessen wird.

2. Mittel nach Anspruch 1, **dadurch gekennzeichnet, dass** die in der flüssigen Phase suspendierten, Polyester-haltigen Feststoffpartikel einen mittleren Partikeldurchmesser X_{50,3} von 1 mm bis 2 mm aufweisen.

3. Mittel nach Anspruch 1 oder 2, **dadurch gekennzeichnet, dass** die Gesamtmenge des in den suspendierten Feststoffpartikeln enthaltenen besagten anionischen Polyesters im Zahlenmittel 1 bis 50 Struktureinheiten der Formel (I) und 1 bis 50 Struktureinheiten der Formel (III) enthält.

4. Mittel nach einem der Ansprüche 1 bis 3, **dadurch gekennzeichnet, dass** die Gesamtmenge des in den suspendierten Feststoffpartikeln enthaltenen besagten Polyesters jeweils im Zahlenmittel
zwischen 1 und 25, insbesondere zwischen 1 bis 10, besonders bevorzugt zwischen 1 und 5, Struktureinheiten der Formel (I), und zwischen 0,05 und 15, insbesondere zwischen 0,1 und 10 und besonders bevorzugt zwischen 0,25 und 3, Struktureinheiten der Formel (II) enthalten und zwischen 1 und 30, insbesondere zwischen 2 und 15, besonders bevorzugt zwischen 3 und 10, Struktureinheiten der Formel (III) enthalten.

5. Mittel nach einem der Ansprüche 1 bis 4, **dadurch gekennzeichnet, dass** in Formeln (I), (II) und (III) des Polyesters R¹,R²,R³,R⁴,R⁵ und R⁶ unabhängig voneinander jeweils für Wasserstoff oder Methyl stehen.

6. Mittel nach einem der Ansprüche 1 bis 5, **dadurch gekennzeichnet, dass** in Formel (II) des Polyesters R⁷ für Methyl steht.

7. Mittel nach einem der Ansprüche 1 bis 6, **dadurch gekennzeichnet, dass** in Formeln (I), (II) und (III) des Polyesters a, b und c unabhängig voneinander jeweils für eine Zahl von 1 bis 200, insbesondere 1 bis 20, besonders bevorzugt 1 bis 5, außerordentlich bevorzugt a und b = 1 und c eine Zahl von 2 bis 10, sind.

8. Mittel nach einem der Ansprüche 1 bis 7, **dadurch gekennzeichnet, dass** besagte Polyester festförmig sind und Erweichungspunkte oberhalb 40 °C, bevorzugt zwischen 50 und 200°C, besonders bevorzugt zwischen 80°C und 150°C und außerordentlich bevorzugt zwischen 100°C und 120°C, aufweisen.

9. Mittel nach einem der Ansprüche 1 bis 8, **dadurch gekennzeichnet, dass** in besagten suspendierten Feststoffpartikeln zusätzlich mindestens ein weiterer Inhaltsstoff, ausgewählt aus Plastifizierhilfststoff, Enzym, Enzymstabilisator, Bleichmittel, Bleichaktivator, Komplexbildner für Schwermetalle, Vergrauungsinhibitor, Farbübertragungsinhibitor, Schauminhibitor, optischer Aufheller, Riechstoffe, Dichtestellmittel, oder Mischungen aus diesen.

10. Mittel nach einem der Ansprüche 1 bis 9, **dadurch gekennzeichnet, dass** in besagten suspendierten Feststoffpartikeln zusätzlich mindestens ein Plastifizierhilfsstoff enthalten ist, ausgewählt aus Triethylcitrat, Triacetin, 1,2-Propylenglykol, Glyzerin, 2-Methyl-1,3-propylenglykol, Wasser oder Mischungen aus diesen.

11. Mittel nach einem der Ansprüche 1 bis 10, **dadurch gekennzeichnet, dass** die flüssige Phase eine Fließgrenze aufweist.

12. Mittel nach einem der Ansprüche 1 bis 11, **dadurch gekennzeichnet, dass** die flüssige Phase bezogen auf das Gesamtgewicht der flüssigen Phase
- Wasser,
- 5 bis 20 Gew.-% anionisches Tensid ausgewählt aus der Gruppe bestehend aus Sulfonat-Tensiden, Sulfat-Tensiden und Mischungen daraus,
- 0,4 bis 6 Gew.-% eines Co-Tensids ausgewählt aus der Gruppe bestehend aus alkoxylierten C₈-C₁₈-Fettalkoholen mit einem Alkoxylierungsgrad ≤ 3, aliphatischen C₆-C₁₄-Alkoholen, aromatischen C₆-C₁₄-Alkoholen, aliphatischen C₆-C₁₂-Dialkoholen, Monoglyceride von C₁₂-C₁₈-Fettsäuren, Monoglycerinether von C₈-C₁₈-Fettalkoholen und Mischungen daraus,
- 1 bis 15 Gew.-% vom besagten Co-Tensid verschiedenes nichtionisches Tensid, bevorzugt ausgewählt aus der Gruppe bestehend aus alkoxylierten Fettalkoholen mit einem Alkoxylierungsgrad ≥ 4, alkoxylierten Fettsäurealkylestern, Fettsäureamiden, alkoxylierten Fettsäureamiden, Polyhydroxyfettsäureamiden, Alkylphenolpolyglycolethern, Aminoxiden, Alkylpolyglucosiden und Mischungen daraus, und
- 0,5 bis 10 Gew.-% eines anorganischen Salzes
enthält.

13. Verwendung eines partikulären Feststoffs mit einem mittleren Partikeldurchmesser X_{50,3} Volumenmittel, von 0,01 mm bis 3 mm enthaltend bezogen auf das Gesamtgewicht
i) eine Gesamtmenge von 30 bis 100 Gew.-%, bevorzugt 50 bis 100 Gew.-%, besonders bevorzugt 75 bis 100 Gew.-%, mindestens eines anionischen Polyesters, enthaltend mindestens eine Struktureinheit der Formel (I) und mindestens eine Struktureinheit der Formel (II) und mindestens eine Struktureinheit der Formel (III) 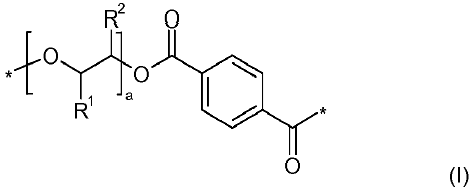 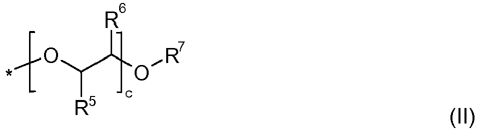 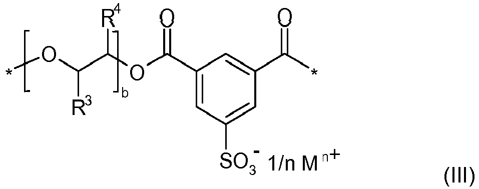 worin
a, b und c unabhängig voneinander jeweils für eine Zahl von 1 bis 200 steht,
R¹, R², R⁵ und R⁶ unabhängig voneinander jeweils für Wasserstoff oder eine C₁-C₁₈-n-Alkylgruppe oder C₃-C₁₈-iso-Alkylgruppe steht,
R⁷ für eine lineare oder verzweigte C₁-C₃₀-Alkylgruppe oder für eine lineare oder verzweigte C₂-C₃₀-Alkenylgruppe, für eine Cycloalkylgruppe mit 5 bis 9 Kohlenstoffatomen, für eine C₆-C₃₀-Arylgruppe oder für eine C₆-C₃₀-Arylalkylgruppe steht,
1/n Mⁿ⁺ für ein Äquivalent eines Kations mit der Ladungszahl n steht mit n = 1, 2 oder 3,
R³ und R⁴ unabhängig voneinander jeweils für Wasserstoff oder eine C₁-C₁₈-n-Alkylgruppe oder C₃-C₁₈-iso-Alkylgruppe steht,
* für eine freie Valenz des betreffenden Strukturelements steht, die im Polymerrückgrat des Polyesters eine Esterverknüpfung ausbildet, und
ii) eine Gesamtmenge von zwischen 0 bis 70 Gew.-%, insbesondere zwischen 0 bis 50 Gew.-%, besonders bevorzugt zwischen 0 bis 25 Gew.-%, mindestens eines weiteren Inhaltsstoffes, ausgewählt aus Weichmacher, Plastifizierhilfststoff, Enzym, Enzymstabilisator, Komplexbildner für Schwermetalle, Vergrauungsinhibitor, Farbübertragungsinhibitor, Schauminhibitor, optischer Aufheller, Riechstoff, Dichtestellmittel oder Mischungen aus diesen,
mit der Maßgabe, dass der mittlere Partikeldurchmesser X_{50,3} vor der Einarbeitung in die in die flüssige Phase des Mittels nach Lagerung der Feststoffpartikel im Klimaschrank für 24 Stunden bei 30°C und 50 % relativer Luftfeuchtigkeit gemessen wird,
und einer flüssigen Phase, enthaltend Wasser und Tensid, zur Herstellung eines flüssigen Wasch- oder Reinigungsmittels.

14. Verwendung eines partikulären Feststoffes nach Anspruch 13, wobei der partikuläre Feststoff bezogen auf das Gesamtgewicht
i) 50 bis 99 Gew.-% mindestens eines besagten Polyesters, und
ii) 1 bis 15 Gew.-% mindestens eines Plastifizierhilfsstoffs, (bevorzugt ausgewählt aus Triethylcitrat, Triacetin, 1,2-Propylenglykol, Glyzerin, 2-Methyl-1,3-propylenglykol, Wasser oder Mischungen aus diesen), und
iii) 0 bis 49 Gew.-% mindestens eines weiteren Inhaltsstoffes, ausgewählt aus Enzym, Enzymstabilisator, Komplexbildner für Schwermetalle, Vergrauungsinhibitor, Farbübertragungsinhibitor, Schauminhibitor, optischer Aufheller, Riechstoff, Dichtestellmittel, Farbstoff oder Mischungen aus diesen, enthält.

## Claims

1. A liquid washing or cleaning agent, containing
(i) a liquid phase containing at least one surfactant and water, and
(ii) in the liquid phase, suspended solid particles having an average particle diameter X_{50.3}, volume average, of from 0.01 mm to 3 mm, containing, based on the weight of the solid particles, a total amount of from 30 to 100 wt.%, preferably 50 to 100 wt.%, particularly preferably 75 to 100 wt.%, of at least of one anionic polyester, containing at least one structural unit of formula (I) and at least one structural unit of formula (II) and at least one structural unit of formula (III), 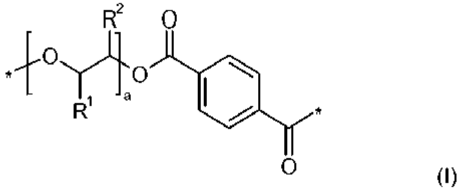 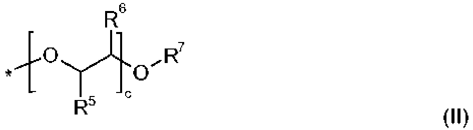 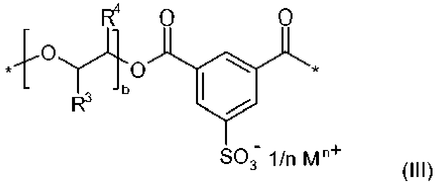 where
a, b and c each represent, independently of one another, a number from 1 to 200,
R¹, R², R⁵ and R⁶ each represent, independently of one another, hydrogen or a C₁-C₁₈ n-alkyl group or C₃-C₁₈ iso-alkyl group,
1/n Mⁿ⁺ represents an equivalent of a cation having the charge number n, where n = 1, 2 or 3,
R³ and R⁴ each represent, independently of one another, hydrogen or a C₁-C₁₈ n-alkyl group or C₃-C₁₈ iso-alkyl group,
R⁷ represents a linear or branched C₁-C₃₀ alkyl group or a linear or branched C₂-C₃₀ alkenyl group, a cycloalkyl group having 5 to 9 carbon atoms, a C₆-C₃₀ aryl group or a C₆-C₃₀ arylalkyl group,
* represents a free valence of the structural element concerned, which valence forms an ester bond in the polymer backbone of the polyester, with the proviso that the average particle diameter X_{50.3} is measured before the incorporation into the liquid phase of the agent after storing the solid particles in the climatic chamber for 24 hours at 30 °C and 50% relative humidity.

2. The agent according to claim 1, **characterized in that** the solid particles that are suspended in the liquid phase and contain polyester have an average particle diameter X_{50.3} of from 1 mm to 2 mm.

3. The agent according to claim 1 or 2, **characterized in that** the total amount of said anionic polyester contained in the suspended solid particles contains a number average of 1 to 50 structural units of formula (I) and 1 to 50 structural units of formula (III).

4. The agent according to one of claims 1 to 3, **characterized in that** the total amount of said polyester contained in the suspended solid particles contains in each case a number average of between 1 and 25, in particular between 1 and 10, particularly preferably between 1 and 5, structural units of formula (I), and between 0.05 and 15, in particular between 0.1 and 10 and particularly preferably between 0.25 and 3, structural units of formula (II) and between 1 and 30, in particular between 2 and 15, particularly preferably between 3 and 10, structural units of formula (III).

5. The agent according to one of claims 1 to 4, **characterized in that** in formulas (I), (II) and (III) of the polyester, R¹, R², R³, R⁴, R⁵ and R⁶ each represent, independently of one another, hydrogen or methyl.

6. The agent according to one of claims 1 to 5, **characterized in that** in formula (II) of the polyester, R⁷ represents methyl.

7. The agent according to one of claims 1 to 6, **characterized in that** in formulas (I), (II) and (III) of the polyester, a, b and c are each, independently of one another, a number from 1 to 200, in particular 1 to 20, particularly preferably 1 to 5, and extremely preferably a and b = 1 and c is a number from 2 to 10.

8. The agent according to one of claims 1 to 7, **characterized in that** said polyesters are solid and have softening points above 40 °C, preferably between 50 and 200 °C, particularly preferably between 80 °C and 150 °C and extremely preferably between 100 °C and 120 °C.

9. The agent according to one of claims 1 to 8, **characterized in that** in said suspended solid particles additionally at least one further ingredient is contained which is selected from plasticizing aid, enzyme, enzyme stabilizer, bleaching agent, bleach activator, complexing agent for heavy metals, graying inhibitor, dye transfer inhibitor, suds suppressor, optical brightener, odorants, density control agent, or mixtures thereof.

10. The agent according to one of claims 1 to 9, **characterized in that** in said suspended solid particles additionally at least one plasticizing aid is contained which is selected from triethyl citrate, triacetin, 1,2-propylene glycol, glycerol, 2-methyl-1,3-propylene glycol, water or mixtures thereof.

11. The agent according to one of claims 1 to 10, **characterized in that** the liquid phase has a yield point.

12. The agent according to one of claims 1 to 11, **characterized in that** the liquid phase contains, based on the total weight of the liquid phase,
- water,
- 5 to 20 wt.% of anionic surfactant, selected from the group consisting of sulfonate surfactants, sulfate surfactants and mixtures thereof,
- 0.4 to 6 wt.% of a co-surfactant selected from the group consisting of alkoxylated C₈-C₁₈ fatty alcohols having a degree of alkoxylation of ≤ 3, aliphatic C₆-C₁₄ alcohols, aromatic C₆-C₁₄ alcohols, aliphatic C₆-C₁₂ dialcohols, monoglycerides of C₁₂-C₁₈ fatty acids, monoglycerol ethers of C₈-C₁₈ fatty alcohols and mixtures thereof,
- 1 to 15 wt.% of a non-ionic surfactant different from said co-surfactant, preferably selected from the group consisting of alkoxylated fatty alcohols having a degree of alkoxylation of ≥ 4, alkoxylated fatty acid alkyl esters, fatty acid amides, alkoxylated fatty acid amides, polyhydroxy fatty acid amides, alkylphenol polyglycol ethers, amine oxides, alkyl polyglucosides and mixtures thereof, and
- 0.5 to 10 wt.% of an inorganic salt.

13. The use of a particulate solid having an average particle diameter X_{50.3}, volume average, of from 0.01 mm to 3 mm, containing, based on the total weight,
i) a total amount of from 30 to 100 wt.%, preferably 50 to 100 wt.%, particularly preferably 75 to 100 wt.%, of at least of one anionic polyester, containing at least one structural unit of formula (I) and at least one structural unit of formula (II) and at least one structural unit of formula (III) 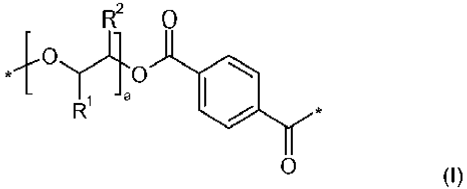 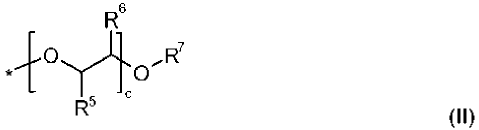 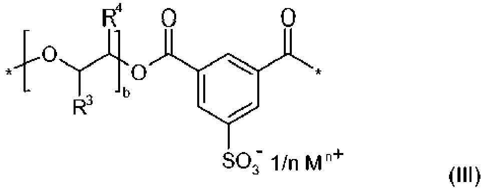 where
a, b and c each represent, independently of one another, a number from 1 to 200,
R¹, R², R⁵ and R⁶ each represent, independently of one another, hydrogen or a C₁-C₁₈ n-alkyl group or C₃-C₁₈ iso-alkyl group,
R⁷ represents a linear or branched C₁-C₃₀ alkyl group or a linear or branched C₂-C₃₀ alkenyl group, a cycloalkyl group having 5 to 9 carbon atoms, a C₆-C₃₀ aryl group or a C₆-C₃₀ arylalkyl group,
1/n Mⁿ⁺ represents an equivalent of a cation having the charge number n, where n = 1, 2 or 3, R³ and R⁴ each represent, independently of one another, hydrogen or a C₁-C₁₈ n-alkyl group or C₃-C₁₈ iso-alkyl group,
* represents a free valence of the structural element concerned, which forms an ester bond in the polymer backbone of the polyester, and
ii) a total amount of between 0 to 70 wt.%, in particular between 0 to 50 wt.%, particularly preferably between 0 to 25 wt.%, of at least of one further ingredient selected from plasticizer, plasticizing aid, enzyme, enzyme stabilizer, complexing agent for heavy metals, graying inhibitor, dye transfer inhibitor, suds suppressor, optical brightener, odorant, density control agent or mixtures thereof, with the proviso that the average particle diameter X_{50.3} is measured before the incorporation into the liquid phase of the agent after storing the solid particles in the climatic chamber for 24 hours at 30 °C and 50% relative humidity,
and the use of a liquid phase, containing water and surfactant, for preparing a liquid washing or cleaning agent.

14. The use of a particulate solid according to claim 13, wherein the particulate solid contains, based on the total weight,
i) 50 to 99 wt.% of at least one said polyester, and
ii) 1 to 15 wt.% at least of one plasticizing aid, (preferably selected from triethyl citrate, triacetin, 1,2-propylene glycol, glycerol, 2-methyl-1,3-propylene glycol, water or mixtures thereof), and
iii) 0 to 49 wt.% at least of one further ingredient, selected from enzyme, enzyme stabilizer, complexing agent for heavy metals, graying inhibitor, dye transfer inhibitor, suds suppressor, optical brightener, odorant, density control agent, dye or mixtures thereof.

## Revendications

1. Agent de lavage ou de nettoyage liquide contenant
(i) une phase liquide contenant au moins un tensioactif et de l'eau, et
(ii) des particules solides en suspension dans la phase liquide et ayant un diamètre moyen de particule X_{50,3} (taille moyenne) allant de 0,01 mm à 3 mm, contenant, par rapport au poids des particules solides, une quantité totale de 30 à 100 % en poids, de préférence de 50 à 100 % en poids, de manière particulièrement préférée de 75 à 100 % en poids d'au moins un polyester anionique, contenant au moins un motif structural de formule (I), au moins un motif structural de formule (II) et au moins un motif structural de formule (III), 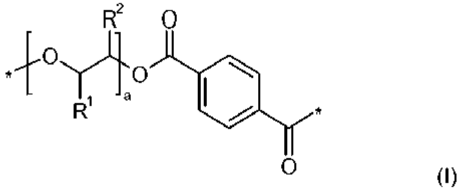 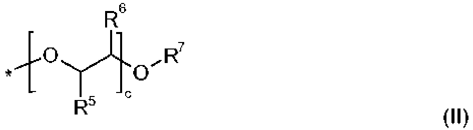 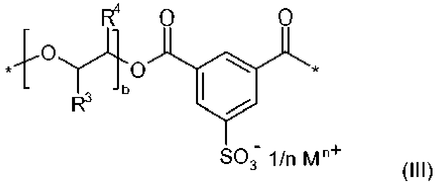 dans lesquelles
a, b et c représentent chacun, indépendamment l'un de l'autre, un nombre allant de 1 à 200,
R¹, R², R⁵ et R⁶ représentent chacun, indépendamment les uns des autres, un atome d'hydrogène, un groupe n-alkyle en C₁ à C₁₈ ou un groupe iso-alkyle en C₃ à C₁₈,
1/n Mⁿ⁺ représente un équivalent d'un cation de valence n, avec n = 1, 2 ou 3,
R³ et R⁴ représentent chacun, indépendamment l'un de l'autre, un atome d'hydrogène, un groupe n-alkyle en C₁ à C₁₈ ou un groupe iso-alkyle en C₃ à C₁₈,
R⁷ représente un groupe alkyle en C₁ à C₃₀ linéaire ou ramifié, un groupe alcényle en C₂ à C₃₀ linéaire ou ramifié, un groupe cycloalkyle ayant 5 à 9 atomes de carbone, un groupe aryle en C₆ à C₃₀ ou un groupe arylalkyle en C₆ à C₃₀,
* représente une valence libre de l'élément structural concerné, qui forme une liaison ester dans le squelette de polymère du polyester, à condition que le diamètre moyen de particule X_{50,3} soit mesuré avant l'incorporation dans la phase liquide de l'agent, après stockage des particules solides dans l'incubateur pendant 24 heures à 30 °C et 50 % d'humidité relative.

2. Agent selon la revendication 1, **caractérisé en ce que** les particules solides contenant le polyester en suspension dans la phase liquide présentent un diamètre moyen de particule X_{50,3} allant de 1 mm à 2 mm.

3. Agent selon la revendication 1 ou 2, **caractérisé en ce que** la quantité totale dudit polyester anionique contenu dans les particules solides en suspension est, en moyenne numérique, de 1 à 50 motifs structuraux de formule (I) et de 1 à 50 motifs structuraux de formule (III).

4. Agent selon l'une des revendications 1 à 3, **caractérisé en ce que** la quantité totale dudit polyester contenu dans les particules solides en suspension est comprise, dans chaque cas, entre 1 et 25, en particulier entre 1 et 10, de manière particulièrement préférée entre 1 et 5 motifs structuraux de formule (I), entre 0,05 et 15, en particulier entre 0,1 et 10, et de manière particulièrement préférée entre 0,25 et 3 motifs structuraux de formule (II), et entre 1 et 30, en particulier entre 2 et 15, de manière particulièrement préférée entre 3 et 10 motifs structuraux de formule (III).

5. Agent selon l'une des revendications 1 à 4, **caractérisé en ce que**, dans les formules (I), (II) et (III) du polyester, R¹, R², R³, R⁴, R⁵ et R⁶ représentent chacun, indépendamment l'un de l'autre, un atome d'hydrogène ou un méthyle.

6. Agent selon l'une des revendications 1 à 5, **caractérisé en ce que**, dans la formule (II) du polyester, R⁷ représente un méthyle.

7. Agent selon l'une des revendications 1 à 6, **caractérisé en ce que**, dans les formules (I), (II) et (III) du polyester, a, b et c sont chacun, indépendamment l'un de l'autre, un nombre allant de 1 à 200, en particulier de 1 à 20, de manière particulièrement préférée de 1 à 5, et de manière extrêmement préférée a et b = 1, et c est un nombre allant de 2 à 10.

8. Agent selon l'une des revendications 1 à 7, **caractérisé en ce que** lesdits polyesters sont solides et présentent des points de ramollissement supérieurs à 40 °C, de préférence compris entre 50 et 200 °C, de manière particulièrement préférée entre 80 °C et 150 °C, et de manière extrêmement préférée entre 100 °C et 120 °C.

9. Agent selon l'une des revendications 1 à 8, **caractérisé en ce que** lesdites particules solides en suspension contiennent en outre au moins un autre constituant choisi parmi un agent plastifiant, une enzyme, un stabilisant enzymatique, un agent de blanchiment, un activateur de blanchiment, un agent chélatant pour métaux lourds, un inhibiteur de grisaillement, un inhibiteur de transfert de couleur, un inhibiteur de mousse, un azurant optique, des substances aromatiques, un scellant ou des mélanges de ceux-ci.

10. Agent selon l'une des revendications 1 à 9, **caractérisé en ce que** lesdites particules solides en suspension contiennent en outre au moins un agent plastifiant choisi parmi le citrate de triéthyle, la triacétine, le 1,2-propylèneglycol, le glycérol, le 2-méthyl-1,3-propylèneglycol, l'eau ou des mélanges de ceux-ci.

11. Agent selon l'une des revendications 1 à 10, **caractérisé en ce que** la phase liquide présente une limite d'élasticité.

12. Agent selon l'une des revendications 1 à 11, **caractérisé en ce que** la phase liquide contient, par rapport à son poids total,
- de l'eau,
- 5 à 20 % en poids de tensioactif anionique choisi dans le groupe constitué par les tensioactifs à base de sulfonates, les tensioactifs à base de sulfates et des mélanges de ceux-ci,
- 0,4 à 6 % en poids d'un co-tensioactif choisi dans le groupe constitué par les alcools gras alcoxylés en C₈ à C₁₈ ayant un degré d'alcoxylation ≤ 3, les alcools aliphatiques en C₆ à C₁₄, les alcools aromatiques en C₆ à C₁₄, les dialcools aliphatiques en C₆ à C₁₂, les monoglycérides d'acides gras en C₁₂ à C₁₈, les éthers monoglycériques d'alcools gras en C₈ à C₁₈ et des mélanges de ceux-ci,
- 1 à 15 % en poids de tensioactif non ionique différent dudit co-tensioactif et choisi de préférence dans le groupe constitué par les alcools gras alcoxylés ayant un degré d'alcoxylation ≥ 4, les alkylesters d'acides gras alcoxylés, les amides d'acides gras, les amides d'acides gras alcoxylés, les amides d'acides gras polyhydroxylés, les polyglycoléthers d'alkylphénol, les oxydes d'amines, les polyglucosides d'alkyle et des mélanges de ceux-ci, et
- 0,5 à 10 % en poids d'un sel inorganique.

13. Utilisation d'une matière solide particulaire ayant un diamètre moyen de particule X_{50,3} (taille moyenne) allant de 0,01 mm à 3 mm et contenant, par rapport au poids total,
i) une quantité totale de 30 à 100 % en poids, de préférence de 50 à 100 % en poids, de manière particulièrement préférée de 75 à 100 % en poids d'au moins un polyester anionique contenant au moins un motif structural de formule (I), au moins un motif structural de formule (II) et au moins un motif structural de formule (III), 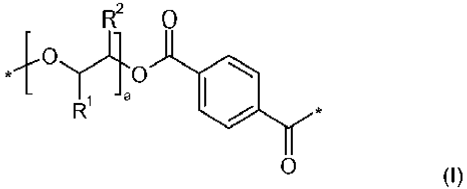 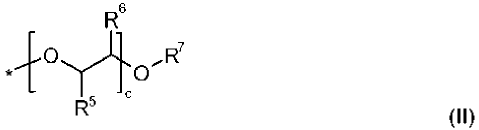 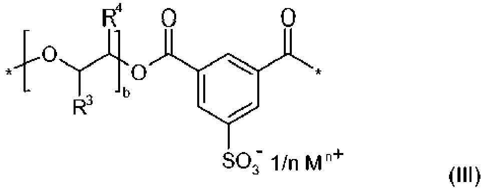 dans lesquelles
a, b et c représentent chacun, indépendamment l'un de l'autre, un nombre allant de 1 à 200,
R¹, R², R⁵ et R⁶ représentent chacun, indépendamment les uns des autres, un atome d'hydrogène, un groupe n-alkyle en C₁ à C₁₈ ou un groupe iso-alkyle en C₃ à C₁₈,
R⁷ représente un groupe alkyle en C₁ à C₃₀ linéaire ou ramifié, un groupe alcényle en C₂ à C₃₀ linéaire ou ramifié, un groupe cycloalkyle ayant 5 à 9 atomes de carbone, un groupe aryle en C₆ à C₃₀ ou un groupe arylalkyle en C₆ à C₃₀,
1/n Mⁿ⁺ représente un équivalent d'un cation de valence n, avec n = 1, 2 ou 3, R³ et R⁴ représentent chacun, indépendamment l'un de l'autre, un atome d'hydrogène, un groupe n-alkyle en C₁ à C₁₈ ou un groupe iso-alkyle en C₃ à C₁₈,
* représente une valence libre de l'élément structural concerné, qui forme une liaison ester dans le squelette polymère du polyester,
ii) une quantité totale comprise entre 0 et 70 % en poids, en particulier entre 0 et 50 % en poids, de manière particulièrement préférée entre 0 et 25 % en poids d'au moins un autre constituant choisi parmi un assouplissant, un agent plastifiant, une enzyme, un stabilisant enzymatique, un agent chélatant pour métaux lourds, un inhibiteur de grisaillement, un inhibiteur de transfert de couleur, un inhibiteur de mousse, un azurant optique, une substance aromatique, un scellant ou des mélanges de ceux-ci, à condition que le diamètre moyen de particule X_{50,3} soit mesuré avant l'incorporation dans la phase liquide de l'agent, après stockage des particules solides dans l'incubateur pendant 24 heures à 30 °C et 50 % d'humidité relative, et une phase liquide contenant de l'eau et un tensioactif, pour la préparation d'un agent de lavage ou de nettoyage liquide.

14. Utilisation d'une matière solide particulaire selon la revendication 13, dans laquelle la matière solide particulaire contient, par rapport à son poids total,
i) 50 à 99 % en poids d'au moins un dit polyester, et
ii) 1 à 15 % en poids d'au moins un agent plastifiant (choisi de préférence parmi le citrate de triéthyle, la triacétine, le 1,2-propylèneglycol, le glycérol, le 2-méthyl-1,3-propylèneglycol, l'eau ou des mélanges de ceux-ci), et
iii) 0 à 49 % en poids d'au moins un autre constituant choisi parmi une enzyme, un stabilisant enzymatique, un agent chélatant pour métaux lourds, un inhibiteur de grisaillement, un inhibiteur de transfert de couleur, un inhibiteur de mousse, un azurant optique, une substance aromatique, un scellant, un colorant ou leurs mélanges.
